Europäisches Patentamt

European Patent Office

Office européen des brevets

(11) EP 1 226 861 A1

(19)

(12) **EUROPÄISCHE PATENTANMELDUNG**

(43) Veröffentlichungstag:
31.07.2002   Patentblatt 2002/31

(51) Int Cl.⁷: **B01D 53/94**, F01N 3/20

(21) Anmeldenummer: 01129922.9

(22) Anmeldetag: 15.12.2001

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(30) Priorität: **30.01.2001  DE 10104160**

(71) Anmelder: **OMG AG & Co. KG**
**63457 Hanau (DE)**

(72) Erfinder:
• **Pfeifer, Marcus Dr.**
  **42719 Solingen (DE)**

• **Van Setten, Barry Dr.**
  **63517 Rodenbach (DE)**
• **Gieshoff, Jürgen Dr.**
  **63599 Biebergemünd (DE)**
• **Spurk, Paul Dr.**
  **64732 Bad König (DE)**
• **Lox, Egbert Dr.**
  **63403 Hanau (DE)**
• **Kreuzer, Thomas Dr.**
  **61184 Karben (DE)**

(74) Vertreter: **Stellbrink, Axel et al**
**Vossius & Partner**
**Siebertstrasse 4**
**81675 München (DE)**

(54) **Abgasreinigungsanlage für einen Verbrennungsmotor und Verfahren zum Betreiben der Anlage**

(57)  Die Erfindung betrifft eine Abgasreinigungsanlage für einen Verbrennungsmotor mit einer ersten Katalysatoreinheit, die bei fetter Abgaszusammensetzung Ammoniak aus entsprechenden Abgasbestandteilen erzeugt, und einer der ersten nachgeschalteten zweiten Katalysatoreinheit, die bei fetter Abgaszusammensetzung den von der ersten Katalysatoreinheit erzeugten Ammoniak zwischenspeichert und bei magerer Abgaszusammensetzung im Abgas enthaltene Stickoxide einer Reduktionsreaktion unter Einsatz des zwischengespeicherten Ammoniaks als Reduktionsmittel unterzieht. Die Abgasreinigungsanlage ist dadurch gekennzeichnet, daß eine den beiden Katalysatoreinheiten zwischengeschaltete, dritte Katalysatoreinheit bei magerer Abgaszusammensetzung die im Abgas enthaltenen Stickoxide in einem Maße zu Stickstoffdioxid oxidiert, daß die im Abgas enthaltenen Stickoxide beim Eintritt in die zweite Katalysatoreinheit zu 25 bis 75 Vol.-% aus Stickstoffdioxid bestehen.

Abgas

**Figur 1**

EP 1 226 861 A1

**Beschreibung**

Die Erfindung betrifft eine Abgasreinigungsanlage für einen Verbrennungsmotor mit einer ersten Katalysatoreinheit, die bei fetter Abgaszusammensetzung Ammoniak aus entsprechenden Abgasbestandteilen erzeugt, und einer der ersten nachgeschalteten zweiten Katalysatoreinheit, die bei fetter Abgaszusammensetzung den von der ersten Katalysatoreinheit erzeugten Ammoniak zwischenspeichert und bei magerer Abgaszusammensetzung im Abgas enthaltene Stickoxide (NOx) einer Reduktionsreaktion unter Einsatz des zwischengespeicherten Ammoniaks als Reduktionsmittel unterzieht.

Zur Verminderung des Kraftstoffverbrauchs wurden in den letzten Jahren Kraftfahrzeugmotoren entwickelt, die mit mageren Luft/Kraftstoff-Gemischen betrieben werden. Es handelt sich um sogenannte Magermotoren. Als mager wird ein Luft/Kraftstoff-Gemisch bezeichnet, wenn es mehr Sauerstoff enthält als für die vollständige Verbrennung des Kraftstoffes notwendig wäre. Im umgekehrten Fall liegt ein fettes Luft/Kraftstoff-Gemisch vor. Zur quantitativen Erfassung dieser Situation werden das Luft/Kraftstoff-Verhältnis oder die Luftzahl Lambda ($\lambda$) verwendet. Das Luft/Kraftstoff-Verhältnis gibt an, wieviel Kilogramm Luft pro Kilogramm Kraftstoff dem Motor zugeführt werden. Für eine stöchiometrische Verbrennung liegt das Luft/Kraftstoff-Verhältnis bei üblichen Motorkraftstoffen bei 14,7. Die zugehörige Luftzahl $\lambda$ ist das auf stöchiometrische Bedingungen normierte Luft/Kraftstoff-Verhältnis und hat daher für ein stöchiometrisch zusammengesetztes Luft/Kraftstoff-Gemisch den Wert 1,0. Die Luftzahl des den Motor verlassenden Abgases ist gleich der Luftzahl des dem Motor zugeführten Luft/Kraftstoff-Gemisches, wenn im Motor keine selektiven Speicherprozesse für bestimmte Abgaskomponenten auftreten.

Magermotoren werden im Normalbetrieb mit Luft/Kraftstoff-Verhältnissen entsprechend einer Luftzahl von mehr als 1,3 betrieben. Der Sauerstoffgehalt des Abgases liegt bei diesen Motoren gewöhnlich zwischen 3 und 15 Vol.-%. Bei Beschleunigungsfahrten und auch bei Vollast werden auch dem Magermotor stöchiometrische, beziehungsweise leicht fette Luft/Kraftstoff-Gemische, zugeführt, um die benötigten hohen Leistungen zur Verfügung stellen zu können.

Die Abgasreinigung von Magermotoren bereitet erhebliche Probleme, da die im Abgas enthaltenen Stickoxide im Magerbetrieb wegen des hohen Sauerstoffgehaltes im Abgas nicht auf chemischem Wege reduziert werden können. Die im Abgas enthaltenen Stickoxide bestehen abhängig vom Betriebszustand des Motors gewöhnlich zu 60 bis 95 Vol.-% aus Stickstoffmonoxid. Der Rest wird von Stickstoffdioxid und anderen Stickoxiden gebildet.

Zur Lösung der Abgasproblematik bei Magermotoren wurde schon vorgeschlagen, die Stickoxide nach dem Prinzip der selektiven, katalytischen Reduktion mit Hilfe von Ammoniak und dem im mageren Abgas auch enthaltenen Sauerstoff an einem geeigneten Katalysator, einem sogenannten SCR-Katalysator, zu Stickstoff und Wasser umzusetzen. Ein solcher Katalysator enthält zum Beispiel Zeolithe, Siliciumdioxid, Aluminiumoxid und/oder Titanoxid als Trägermaterialien für Kupfer, Eisen, Platin, Palladium und/oder Rhodium und besitzt stets auch ein gewisses Speichervermögen für Ammoniak.

Gemäß der DE 198 20 682 A1 ist es bekannt, zur Verbesserung der Reduktion der Stickoxide im mageren Abgas von Verbrennungsmotoren zunächst den Gehalt des Abgases an Stickstoffdioxid auf bis zu 50 Vol.-% anzuheben. Dies geschieht gemäß der zitierten Offenlegungsschrift durch Oxidation von Stickstoffmonoxid in einer elektrischen Gasentladung zu Stickstoffdioxid. Das so behandelte Abgas wird dann unter Zufuhr eines Reduktionsmittels, bevorzugt Ammoniak, über einen SCR-Katalysator geleitet. Als geeignete SCR-Katalysatoren werden Katalysatoren aus dem Bereich der Kraftwerksentstickung sowie mit Kupfer-Kationen getauschte ZSM-5 Zeolithe genannt.

Von der EP 0 773 354 A1 wurde nun vorgeschlagen, den für die SCR-Reaktion benötigten Ammoniak aus den Abgasbestandteilen an Bord des Kraftfahrzeugs zu synthetisieren. Hierzu wird das Abgas über einen Dreiweg-Katalysator und anschließend über einen SCR-Katalysator geleitet und der Motor alternierend mit mageren und fetten Luft/Kraftstoff-Gemischen betrieben. Während Betriebsphasen mit fetten Luft/Kraftstoff-Gemischen bildet der Dreiweg-Katalysator Ammoniak aus den im Abgas enthaltenen Stickoxiden, welches auf dem SCR-Katalysator zwischengespeichert wird. Während Betriebsphasen mit mageren Luft/Kraftstoff-Gemischen durchqueren die im Abgas enthaltenen Stickoxide den Dreiweg-Katalysator nahezu unverändert und werden durch den vom SCR-Katalysator adsorbierten Ammoniak zu Stickstoff und Wasser reduziert.

Die DE 198 20 828 A1 beschreibt eine Weiterbildung dieses Verfahrens, die darin besteht, daß vor den beiden Katalysatoren ein dritter Katalysator in den Abgasstrom eingefügt wird, der bei magerer Abgaszusammensetzung die im Abgas enthaltenen Stickoxide zwischenspeichert und bei fetter Abgaszusammensetzung wieder freisetzt. Durch die Nutzung von im Magerbetrieb in viel größerer Menge als im fetten Betrieb anfallenden zwischengespeicherten Stickoxiden kann in einer jeweiligen Phase mit fetter Verbrennungsführung eine entsprechend große Ammoniakmenge erzeugt und zwischengespeichert werden, die dann zur effektiven Stickoxidreduktion in einer darauffolgenden Magerbetriebsphase zur Verfügung steht. Insgesamt soll dies einen Betrieb mit hohem Magerbetriebsanteil und folglich mit entsprechend geringem Brennstoffverbrauch ermöglichen.

Beide Vorschläge führen zwar zu einem verbessertem Umsatz der von Magermotoren emittierten Stickoxide, zur Erfüllung der zukünftigen Abgasnormen ist jedoch eine weitere Verbesserung des Stickoxidumsatzes notwendig. Es ist Aufgabe der vorliegenden Erfindung, eine Abgasreinigungsanlage zur Verfügung zu stellen, die eine weitere Verbesserung des Stickoxidumsatzes im Abgas von Magermotoren ermöglicht.

Diese Aufgabe wird gelöst durch eine Abgasreinigungsanlage für einen Verbrennungsmotor mit einer ersten Katalysatoreinheit, die bei fetter Abgaszusammensetzung Ammoniak aus entsprechenden Abgasbestandteilen erzeugt, und einer der ersten nachgeschalteten zweiten Katalysatoreinheit, die bei fetter Abgaszusammensetzung den von der ersten Katalysatoreinheit erzeugten Ammoniak zwischenspeichert und bei magerer Abgaszusammensetzung im Abgas enthaltene Stickoxide einer Reduktionsreaktion unter Einsatz des zwischengespeicherten Ammoniaks als Reduktionsmittel unterzieht. Die Abgasreinigungsanlage ist dadurch gekennzeichnet, daß eine den beiden Katalysatoreinheiten zwischengeschaltete, dritte Katalysatoreinheit bei magerer Abgaszusammensetzung die im Abgas enthaltenen Stickoxide in einem Maße zu Stickstoffdioxid oxidiert, daß die im Abgas enthaltenen Stickoxide beim Eintritt in die zweite Katalysatoreinheit zu 25 bis 75 Vol.-% aus Stickstoffdioxid bestehen.

Wie schon aus dem Stand der Technik bekannt, wird für die erste Katalysatoreinheit ein Dreiweg-Katalysator verwendet. Ein solcher Katalysator enthält als katalytisch aktive Komponenten in der Regel eine Kombination von Edelmetallen der Platingruppe (Platin, Palladium, Rhodium, Iridium, Ruthenium, Osmium), die in feinster Verteilung auf hochoberflächigen Trägeroxiden wie zum Beispiel Aluminiumoxid, Aluminiumsilicat, Siliciumdioxid, Titandioxid und Zirkonoxid abgeschieden sind. Die Platingruppenmetalle finden in verschiedenen Kombinationen Anwendung. So sind trimetallische Katalysatoren bekannt, die Platin, Palladium und Rhodium enthalten. Bimetallische Katalysatoren enthalten gewöhnlich die Kombinationen Platin/Palladium, Platin/Rhodium oder Palladium/Rhodium. Es sind auch Dreiweg-Katalysatoren bekannt, die nur Palladium als einziges Edelmetall der Platingruppe aufweisen. Reine Platin- oder reine Rhodium-Katalysatoren sind als Dreiweg-Katalysatoren ungeeignet. Weiterhin enthalten Dreiweg-Katalysatoren stets auch eine Sauerstoff speichernde Komponente, die Sauerstoff bei mageren Abgasbedingungen speichert und bei fetten Abgaszusammensetzungen wieder abgibt. Gewöhnlich werden hierfür Ceroxid und Praseodymoxid verwendet.

Unter fetten Abgasbedingungen wird Ammoniak ($NH_3$) am Dreiweg-Katalysator zum Beispiel durch Reaktion von Wasserstoff mit Stickstoffmonoxid entsprechend der folgenden Reaktionsgleichung (i) gebildet.

$$5\,H_2 + 2\,NO \leftrightarrow 2\,NH_3 + 2\,H_2O \qquad (i)$$

Der hierfür benötigte Wasserstoff wird zum Teil durch den Verbrennungsprozeß im Motor gebildet. Eine weitere Quelle für Wasserstoff ist der Ceroxid-Gehalt des Katalysators. Bekanntermaßen katalysiert Ceroxid unter fetten Abgasbedingungen die Wassergas-Shift-Reaktion (Reaktion von Kohlenmonoxid mit Wasser zu Wasserstoff und Kohlendioxid) und trägt auf diese Weise zur Erzeugung von Wasserstoff für die Bildung von Ammoniak gemäß Reaktionsgleichung (i) bei. Die Bildung von Ammoniak wird durch hohe Temperaturen begünstigt. Förderlich sind Temperaturen über 300, insbesondere über 400 °C.

Geeignete Dreiweg-Katalysatoren für die Zwecke dieser Erfindung werden in den Offenlegungsschriften DE 197 14 536 A1, DE 197 26 322 A1 und EP 1 046 423 A2 beschrieben.

Für die zweite Katalysatoreinheit werden sogenannte SCR-Katalysatoren verwendet, die in der Lage sind, die selektive Umsetzung von Ammoniak mit den im Abgas enthaltenen Stickoxiden und Sauerstoff zu Stickstoff und Wasser zu katalysieren. Geeignet für diese Zwecke sind zum Beispiel die aus der Kraftwerksentstickung bekannten Katalysatoren auf der Basis von mit den Übergangsmetallen Chrom, Eisen, Nickel, Kupfer, Cer, Praseodym, Terbium oder Mischungen davon ausgetauschten Zeolith-Katalysatoren oder Katalysatoren auf der Basis des Feststoffsäuresystems $V_2O_5/WO_3/TiO_2$.

Für die Oxidation von Stickstoffmonoxid zu Stickstoffdioxid unter mageren Abgasbedingungen gemäß Reaktionsgleichung (ii) wird in der dritten Katalysatoreinheit bevorzugt ein reiner Platin-Katalysator auf einem mit Siliciumdioxid stabilisiertem Aluminiumoxid eingesetzt.

$$2\,NO + O_2 \leftrightarrow 2\,NO_2 \qquad (ii)$$

Das Gleichgewicht gemäß Gleichung (ii) liegt bei tiefen Temperaturen (unter ca. 200 °C) auf der rechten Seite, das heißt in diesem Temperaturbereich ist die Bildung von Stickstoffdioxid thermodynamisch begünstigt. Mit steigenden Temperaturen verschiebt sich das thermodynamische Gleichgewicht zugunsten von Stickstoffmonoxid. Bei Temperaturen oberhalb von 900 °C zerfällt Stickstoffdioxid nahezu vollständig zu Stickstoffmonoxid. Trotz thermodynamisch vorteilhafter Bedingungen ist die Bildung von Stickstoffdioxid auch bei tiefen Temperaturen wegen kinetischer Behinderungen gering. Mit steigenden Temperaturen durchläuft die Bildung von Stickstoffdioxid gemäß Gleichung (ii) daher ein ausgeprägtes Maximum. Lage und Höhe dieses Maximums sind von der Sauerstoffkonzentration im Abgas und von der Aktivität des Oxidationskatalysators abhängig. Für die üblichen Verhältnisse im Abgas von Magermotoren liegt die optimale Umsetzung von Stickstoffmonoxid zu Stickstoffdioxid am Oxidationskatalysator im Bereich zwischen 200 und 400 °C. Bei hoher Aktivität des Oxidationskatalysators liegt das Maximum näher bei 200 °C und erreicht höhere Werte als bei einem Oxidationskatalysator geringerer Aktivität, bei dem das Maximum der Stickstoffdioxidbildung zu höheren Temperaturwerten verschoben ist.

Mit einer erfindungsgemäß konfigurierten Abgasreinigungsanlage konnten deutlich verbesserte Umsätze für die Stickoxide erhalten werden. Ursache hierfür ist vermutlich die optimale Einstellung des Volumenverhältnisses von Stickstoffmonoxid zu Stickstoffdioxid im Abgas durch den zusätzlichen Oxidationskatalysator.

Die Verbesserung der Stickoxidumsätze war nicht vorhersehbar, da schon der Dreiweg-Katalysator eine entsprechende Erhöhung des Anteils von Stickstoffdioxid erwarten ließ. Es zeigte sich jedoch, daß übliche Dreiweg-Katalysatoren unter mageren Abgasbedingungen nur in ungenügendem Maße Stickstoffmonoxid zu Stickstoffdioxid aufoxidieren. Weiterhin bestand die Befürchtung, daß der vom Dreiweg-Katalysator gebildete Ammoniak beim Passieren des Oxidationskatalysator oxidiert wird, bevor er auf dem SCR-Katalysator gespeichert werden kann. Dies ist jedoch nicht der Fall. Offenbar ist der Sauerstoffgehalt im Abgas von Magermotoren im fetten Betrieb so gering, daß eine Oxidation des Ammoniaks am Oxidationskatalysator nicht, oder nur im vernachlässigbaren Umfang, stattfindet.

Eine weitere Verbesserung der Abgasreinigung kann erzielt werden, wenn die erste Katalysatoreinheit in einem Abschnitt der Abgasreinigungsanlage angeordnet wird, in der die Abgastemperaturen die Bildung von Ammoniak unter fetten Abgaszusammensetzungen begünstigen, während die dritte Katalysatoreinheit in einem Abschnitt der Abgasreinigungsanlage angeordnet wird, in der die Abgastemperaturen für die Bildung von Stickstoffdioxid unter mageren Abgaszusammensetzungen optimiert sind.

Wie schon erläutert, wird die Bildung von Ammoniak gefördert, wenn die erste Katalysatoreinheit eine Temperatur oberhalb von etwa 400 °C aufweist. Die erste Katalysatoreinheit sollte also möglichst motornah angeordnet werden. Gleichzeitig wird durch diese hohen Temperaturen bei magerer Abgaszusammensetzung die Bildung von Stickstoffdioxid am Dreiweg-Katalysator weiter unterdrückt, da oberhalb von 350 bis 400 °C das thermodynamische Gleichgewicht zwischen Stickstoffmonoxid und Stickstoffdioxid den Zerfall von Stickstoffdioxid in Stickstoffmonoxid und Sauerstoff fördert. Entsprechend sollte die dritte Katalysatoreinheit in einem Abschnitt der Abgasreinigungsanlage angeordnet werden, in der die Temperatur des Abgases unterhalb von etwa 450 bis 400 °C liegt, um die Bildung von Stickstoffdioxid zu begünstigen. Die hier genannten Temperaturwerte sind nur Richtwerte und hängen unter anderem von den Aktivitäten der verwendeten Katalysatoren und der Zusammensetzung des Motorabgases ab. Diese Parameter können vom Fachmann angepaßt werden, um die mit der erfingungsgemäßen Abgasreinigungsanlage zu erzielende Abgasreinigung zu optimieren.

Die Erfindung wird nur an Hand der Figuren 1 bis 3 näher erläutert. Es zeigen

**Figur 1:** Abgasreinigungsanlage mit separaten Konvertergehäusen für die drei Katalysatoreinheiten I bis III

**Figur 2:** Abgasreinigungsanlage mit einer Anordnung der Katalysatoreinheiten III und II in einem gemeinsamen Gehäuse

**Figur 3:** Abgasreinigungsanlage von Figur 2 mit einer zusätzlichen Katalysatoreinheit IV.

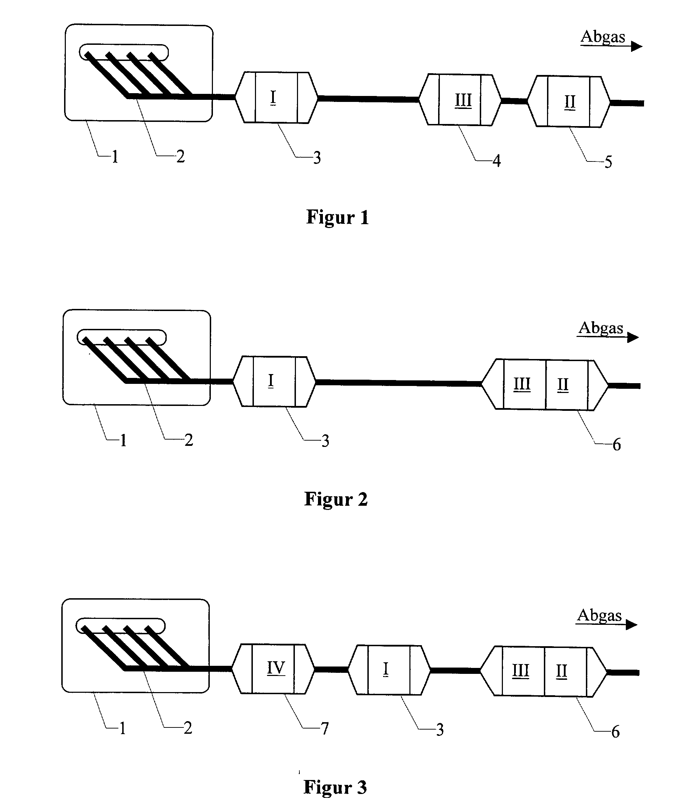

Figur 1 zeigt den Aufbau einer erfindungsgemäßen Abgasreinigungsanlage. Bezugsziffer (1) bezeichnet den Verbrennungsmotor und (2) die Abgasleitung. Die Abgasreinigungsanlage besteht aus den drei separaten Konvertergehäusen (3), (4) und (5), in denen die Katalysatoreinheiten I, II und III angeordnet sind. Katalysatoreinheit I wird von einem Dreiweg-Katalysator, Katalysatoreinheit III von einem Platin-Oxidationskatalysator und Katalysatoreinheit II von einem SCR-Katalysator gebildet. Katalysatoreinheit I ist dicht hinter dem Motor angeordnet. Damit ist gewährleistet, daß die Abgastemperaturen an dieser Stelle in der Regel über 400 °C liegen und somit die Bildung von Ammoniak im Fettbetrieb begünstigen und die Bildung von Stickstoffdioxid im Magerbetrieb unterdrücken. Die Katalysatoreinheiten III und II sind in größerer Entfernung vom Motor in die Abgasleitung eingefügt. Bevorzugt werden diese beiden Katalysatoreinheiten im Unterbodenbereich des Fahrzeugs angebracht. Durch die Abgasleitung zwischen Katalysatoreinheit I und den Katalysatoreinheiten III und II erfährt das Abgas auf seinem Weg zu den Katalysatoreinheiten III und II eine Abkühlung, die so ausgelegt werden kann, daß die Temperaturen an der Katalysatoreinheit III im optimalen Bereich für die Bildung von Stickstoffdioxid liegen.

Figur 2 zeigt eine Variante der Abgasreinigungsanlage. Die Katalysatoreinheiten III und II sind dabei in einem gemeinsamen Konvertergehäuse (6) zusammengefaßt. Figur 3 zeigt eine weitere Variante der erfindungsgemäßen Abgasreinigungsanlage. In diesem Fall ist vor der Katalysatoreinheit I eine vierte Katalysatoreinheit IV in die Abgasleitung eingefügt. Katalysatoreinheit IV wird von einem Stickoxid-Speicherkatalysator gebildet, der einen Großteil der im mageren Abgas enthaltenen Stickoxide zwischenspeichert und bei fetter Abgaszusammensetzung die zuvor zwischengespeicherten Stickoxide wieder freisetzt. Katalysatoren dieser Art sind aus dem Stand der Technik bekannt.

In einer weiteren Variante der erfindungsgemäßen Abgasreinigungsanlage kann hinter Katalysatoreinheit II noch ein Oxidationskatalysator in die Abgasleitung eingefügt werden, um einen eventuellen Ammoniak-Schlupf zu Stickstoff und Wasser zu oxidieren.

Wie die obigen Ausführungen zur erfindungsgemäßen Abgasreinigungsanlage zeigen, werden für eine effiziente Abgasreinigung mit dieser Anlage Betriebsphasen des Motors mit unterschiedlichen Abgaszusammensetzungen benötigt.

Während der überwiegenden Dauer des Motorbetriebs wird er mit einem mageren Luft/Kraftstoff-Gemisch versorgt. Sein Abgas weist dabei eine Luftzahl $\lambda$ größer als 1 auf. Während dieser Betriebsphasen passieren die im Abgas enthaltenen Stickoxide die Katalysatoreinheit I nahezu unverändert. An der Katalysatoreinheit III wird dagegen das im mageren Abgas enthaltene Stickstoffinonoxid zu Stickstoffdioxid aufoxidiert, wobei die Abgasreinigungsanlage so ausgelegt werden kann, daß das Volumenverhältnis zwischen Stickstoffmonoxid und Stickstoffdioxid nach Verlassen der Katalysatoreinheit III zwischen 3:1 und 1:3, bevorzugt zwischen 2:1 und 1:2 und insbesondere bei 1:1 liegt. Das so zusammengesetzte Abgas gelangt nach Verlassen der Katalysatoreinheit III in die Katalysatoreinheit II. Hier wird das im Abgas enthaltene Gemisch aus Stickstoffmonoxid und Stickstoffdioxid unter Verbrauch von vorher in dieser Katalysatoreinheit abgespeichertem Ammoniak in einer selektiven Reduktionsreaktion zu Stickstoff und Wasser umgesetzt.

Zur Erzeugung des für die selektive Reduktion benötigten Ammoniaks sind Betriebsphasen des Motors mit fettem Luft/Kraftstoff-Gemisch ($\lambda$<1) erforderlich. In diesen Betriebsphasen wird am Dreiweg-Katalysator Ammoniak erzeugt. Der Ammoniak passiert mangels eines ausreichenden Sauerstoffgehaltes im Abgas den Oxidationskatalysator unbeschadet und wird vom SCR-Katalysator abgespeichert.

Das für eine effektive Abgasreinigung notwendige Wechselspiel zwischen Betriebsphasen mit magerem und mit fettem Abgas bildet sich in der Regel beim normalen Betrieb des Motors an einem Kraftfahrzeug von selbst heraus. Fette Abgasbedingungen liegen während des Kaltstarts und während Beschleunigungsphasen vor, während magere Abgasbedingungen während einer Fahrt mit konstanter Geschwindigkeit vorliegen. Falls jedoch das notwendige Wechselspiel zwischen beiden Betriebszuständen zum Beispiel durch zu lange Konstantfahrten nicht mehr gewährleistet ist, kann in bestimmten Zeitabständen von der Motorelektronik in eine Betriebsphase mit fettem Luft/Kraftstoff-Gemisch umgeschaltet werden, um so auch in diesen Fällen eine optimale Abgasreinigung zu gewährleisten.

**Patentansprüche**

1. Abgasreinigungsanlage für einen Verbrennungsmotor mit einer ersten Katalysatoreinheit, die bei fetter Abgaszusammensetzung Ammoniak aus entsprechenden Abgasbestandteilen erzeugt, und einer der ersten nachgeschalteten zweiten Katalysatoreinheit, die bei fetter Abgaszusammensetzung den von der ersten Katalysatoreinheit erzeugten Ammoniak zwischenspeichert und bei magerer Abgaszusammensetzung im Abgas enthaltene Stickoxide einer Reduktionsreaktion unter Einsatz des zwischengespeicherten Ammoniaks als Reduktionsmittel unterzieht,
**dadurch gekennzeichnet,**
**daß** eine den beiden Katalysatoreinheiten zwischengeschaltete, dritte Katalysatoreinheit bei magerer Abgaszusammensetzung die im Abgas enthaltenen Stickoxide in einem Maße zu Stickstoffdioxid oxidiert, daß die im Abgas enthaltenen Stickoxide beim Eintritt in die zweite Katalysatoreinheit zu 25 bis 75 Vol.-% aus Stickstoffdioxid bestehen.

2. Abgasreinigungsanlage nach Anspruch 1,
**dadurch gekennzeichnet,**
**daß** eine vierte Katalysatoreinheit der ersten Katalysatoreinheit vorgeschaltet ist und bei magerer Abgaszusammensetzung im Abgas enthaltene Stickoxide zwischenspeichert und bei fetter Abgaszusammensetzung zuvor zwischengespeicherte Stickoxide wieder freisetzt.

3. Abgasreinigungsanlage nach Anspruch 1,
**dadurch gekennzeichnet,**
**daß** die erste Katalysatoreinheit in einem Abschnitt der Abgasreinigungsanlage angeordnet ist, in der die Abgastemperaturen die Bildung von Ammoniak unter fetten Abgaszusammensetzungen begünstigen, während die dritte Katalysatoreinheit in einem Abschnitt der Abgasreinigungsanlage angeordnet ist, in der die Abgastemperaturen die Bildung von Stickstoffdioxid unter mageren Abgaszusammensetzungen begünstigen.

Abgas

I    III    II

1    2    3    4    5

**Figur 1**

Abgas

I    III    II

1    2    3    6

**Figur 2**

Abgas

IV    I    III    II

1    2    7    3    6

**Figur 3**

**Europäisches Patentamt**

## EUROPÄISCHER RECHERCHENBERICHT

Nummer der Anmeldung

EP 01 12 9922

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | EP 0 701 858 A (TOYOTA MOTOR CO LTD) 20. März 1996 (1996-03-20) * Seite 11, Zeile 6 - Seite 12, Zeile 12; Abbildung 8 * | 1-3 | B01D53/94 F01N3/20 |
| X | EP 0 723 805 A (TOYOTA MOTOR CO LTD ;TOYODA CHUO KENKYUSHO KK (JP)) 31. Juli 1996 (1996-07-31) * Seite 10, Zeile 25 - Zeile 34 * * Seite 11, Zeile 17 - Zeile 36 * * Seite 13, Zeile 33 - Zeile 50; Abbildung 2 * | 1-3 | |
| X | EP 1 023 935 A (DEGUSSA) 2. August 2000 (2000-08-02) * Spalte 10, Zeile 15 - Spalte 12, Zeile 9; Abbildungen 5,6 * | 1-3 | |
| Y,D | EP 0 957 242 A (DAIMLER CHRYSLER AG) 17. November 1999 (1999-11-17) * das ganze Dokument * | 1-3 | |
| Y | WO 99 39809 A (GOERSMANN CLAUS FRIEDRICH ;JOHNSON MATTHEY PLC (GB); CHANDLER GUY) 12. August 1999 (1999-08-12) * Ansprüche * | 1-3 | RECHERCHIERTE SACHGEBIETE (Int.Cl.7) B01D F01N |
| A | EP 0 283 913 A (GRACE W R & CO) 28. September 1988 (1988-09-28) * Anspruch 1; Abbildung 1 * | 1-3 | |

Der vorliegende Recherchenbericht wurde für alle Patentansprüche erstellt

| Recherchenort | Abschlußdatum der Recherche | Prüfer |
|---|---|---|
| MÜNCHEN | 16. Mai 2002 | Eijkenboom, A |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
......................................................................
& : Mitglied der gleichen Patentfamilie, übereinstimmendes Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 01 12 9922

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

16-05-2002

| Im Recherchenbericht angeführtes Patentdokument | | Datum der Veröffentlichung | Mitglied(er) der Patentfamilie | | Datum der Veröffentlichung |
|---|---|---|---|---|---|
| EP 0701858 | A | 20-03-1996 | JP | 8135437 A | 28-05-1996 |
| | | | DE | 69515404 D1 | 13-04-2000 |
| | | | DE | 69515404 T2 | 09-11-2000 |
| | | | EP | 0701858 A1 | 20-03-1996 |
| | | | KR | 167404 B1 | 15-12-1998 |
| | | | US | 5746052 A | 05-05-1998 |
| EP 0723805 | A | 31-07-1996 | CN | 1139020 A ,B | 01-01-1997 |
| | | | DE | 69618357 D1 | 14-02-2002 |
| | | | EP | 0723805 A2 | 31-07-1996 |
| | | | JP | 9173782 A | 08-07-1997 |
| | | | KR | 186852 B1 | 15-04-1999 |
| | | | KR | 191228 B1 | 15-06-1999 |
| | | | US | 5783160 A | 21-07-1998 |
| EP 1023935 | A | 02-08-2000 | DE | 19903533 A1 | 10-08-2000 |
| | | | EP | 1023935 A1 | 02-08-2000 |
| | | | JP | 2000271447 A | 03-10-2000 |
| | | | US | 2001002244 A1 | 31-05-2001 |
| EP 0957242 | A | 17-11-1999 | DE | 19820828 A1 | 18-11-1999 |
| | | | DE | 59900369 D1 | 06-12-2001 |
| | | | EP | 0957242 A2 | 17-11-1999 |
| | | | JP | 3108919 B2 | 13-11-2000 |
| | | | JP | 2000027634 A | 25-01-2000 |
| | | | US | 6176079 B1 | 23-01-2001 |
| WO 9939809 | A | 12-08-1999 | AT | 209954 T | 15-12-2001 |
| | | | AU | 2290299 A | 23-08-1999 |
| | | | CA | 2319483 A1 | 12-08-1999 |
| | | | DE | 29923945 U1 | 31-10-2001 |
| | | | DE | 69900548 D1 | 17-01-2002 |
| | | | DK | 1054722 T3 | 04-03-2002 |
| | | | EP | 1054722 A1 | 29-11-2000 |
| | | | WO | 9939809 A1 | 12-08-1999 |
| | | | JP | 2002502927 T | 29-01-2002 |
| | | | NO | 20003963 A | 04-08-2000 |
| EP 0283913 | A | 28-09-1988 | US | 4912776 A | 27-03-1990 |
| | | | AU | 1350988 A | 22-09-1988 |
| | | | BR | 8706315 A | 18-10-1988 |
| | | | DE | 3877229 D1 | 18-02-1993 |
| | | | DE | 3877229 T2 | 29-04-1993 |
| | | | EP | 0283913 A2 | 28-09-1988 |
| | | | JP | 63236522 A | 03-10-1988 |

EPO FORM P0461

Für nähere Einzelheiten zu diesem Anhang : siehe Amtsblatt des Europäischen Patentamts, Nr. 12/82